# EUROPEAN PATENT SPECIFICATION

(11) **EP 2 977 091 B1**
(45) Date of publication and mention of the grant of the patent: **05.08.2020**
(21) Application number: 15173509.9
(22) Date of filing: 24.06.2015
(51) Int. Cl.: B01D 46/00, B01D 46/52, B01D 50/00

(54) **MODULAR FILTER SYSTEM**
MODULARES FILTERSYSTEM
SYSTÈME DE FILTRE MODULAIRE

(30) Priority: 23.07.2014 DE 102014010750
(43) Date of publication of application: 27.01.2016
(73) Proprietor: Mann+Hummel GmbH, 71636 Ludwigsburg (DE)
(72) Inventor: MAIER, Fabian, 67368 Westheim (DE); WETZEL, Jessica, 67067 Ludwigshafen (DE); BÜCHLER, Julian, 51709 Marienheide (DE); LULEY, Oliver, 67346 Speyer (DE); SATHYANATHAN, Lijith, 560097 Bangalore (IN); ARAGBATAGANGAPA ESWARAPA, Suresh, 560073 Bangalore (IN); ACKERMANN, Steffen, 67376 Harthausen (DE); ANTOMON, Chowalloor Rapheal, 560 058 Bangalore (IN)

(56) References cited:
- DE-A1- 10 337 652
- US-A1- 2005 184 005
- US-A1- 2013 219 841

## Description

### Technical Field

The present invention relates to a modular filter system for cleaning of gaseous fluid, in particular air, comprising at least one housing module with at least one support in which at least one filter element is arranged and at least one duct for the gaseous fluid on the clean side of the at least one filter element.

Further, the invention relates to a housing frame part of a housing module of a modular filter system for cleaning of gaseous fluid, in particular air, wherein the housing module comprising at least one support for at least one filter element and at least one duct or duct part for the gaseous fluid on the clean side of the at least one filter element.

Furthermore, the invention relates to a filter module of a modular filter system for cleaning of gaseous fluid, in particular air, comprising at least one housing module with at least one support in which at least one filter element is arranged and at least one duct or duct part for the gaseous fluid on the clean side of the at least one filter element.

Moreover, the invention relates to a housing module of a modular filter system for cleaning of gaseous fluid, in particular air, wherein the housing module comprising at least one support for at least one filter element and at least one duct or duct part for the gaseous fluid on the clean side of the at least one filter element.

### State of Technology

The US 20140202122 A1 discloses a modular design for large pulse jet fabric filters (PJFF), which is divided into similar compartments, which are each "shop-fabricated" in quarter sections prior to delivery to the power plant site. The quarter sections of the compartments are modular and sized so that they can be fabricated at a shop located away from the power plant site and transported by truck over public roads to the power plant site. Once delivered to the site, the quarter sections are bolted together and seal welded to form a PJFF compartment, without requiring additional internal fabrication or welding. The assembled compartment is then lifted onto the support structure as an assembled unit and bolted and/or welded in place. The additional components of the PJFF may also be shop-fabricated offsite to further the benefits of the modular design. US 2005/184005 A1 shows a modular filtration assembly comprising a number of identical, L-shaped filtration modules that provide duct sections, wherein the filtration modules are connected together in an inverse, head-to-tail configuration.

It is an object of the invention to provide a modular filter system, a housing frame part, a filter module and a housing module of the above-mentioned kind, where the parts of the modular filter system can be combined more flexible. Further the number of diverse components required should be reduced. In particular, the diversity of required components should be reduced.

### Disclosure of Invention

The object is achieved by the modular filter system according to claim 1.

According to the invention, at least two housing frame parts are used in at least one housing module in different ways. The at least one housing frame part optionally can have different functions and/or orientations in the at least one housing module. In this way, at least one housing frame part of one design can be used in multiple ways. Thus, the number of different components needed for the modular filter system can be reduced. The diversity of required components can be reduced. So, an expenditure in production, materials, supplies and sampling can be minimized.

Advantageously, the at least two housing frame parts can comprise or consist of plastic.

Multiple housing frame parts of the same design can be combined in different ways to generate the modular filter system as needed. Modular filter systems of different sizes and/or forms can be created by using only one type of the inventive housing frame part mainly.

Advantageously, at least one support section of at least one housing frame part on its own or in combination with at least one support section of at least one adjacent housing frame part can form at least one support for at least one filter element.

Alternatively or additionally, advantageously at least one duct section of at least one housing frame part on its own or in combination with at least one duct section of at least one adjacent housing frame part can form at least one duct or duct part.

In general, at least one housing frame part can be used as a support for the at least one filter element as well as a duct or duct part for the fluid flow, So, a number of different parts can be reduced. In particular, no additional duct parts are required.

Advantageously, at least one housing module can comprise multiple housing frame parts which form at least one support for at least one filter element and at least one duct or duct part for the fluid. Advantageously, multiple housing frame parts can be fixed together to form at least one housing module.

Favorably, a complete housing of the modular filter system can comprise only one housing module or multiple housing modules can be connected individually to form a bigger housing. So, a larger down flow surface can be created for adapting the modular filter system to different individual requirements.

The modular design allows connection of multiple filter modules each comprising at least one housing module with at least one filter element and at least one duct part. The filter modules can be combined based on different fluid flow requirements. Thus, a filter capacity easy can be expanded. With the inventive modular filter system a fluid filtration solution for a flow rate requirement from approximately 20 m³/min, 50 m³/min or 100 m³/min to approximately1000 m³/min or more can be realized.

Advantageously, multiple housing modules can be stacked together in flow direction in the at least one duct or duct part. Additionally or alternatively, multiple housing modules can be stacked together in direction perpendicular to the flow direction in the at least one duct or duct part. In particular, two, three or more housing modules can be stacked together.

At least two housing modules can be attached particularly with at least one mounting location, in particular at least one mounting section, side-by-side. The at least one mounting location can be horizontal, which means that it acts in direction of the fluid duct or duct part.

Alternatively or additionally, at least one housing module can be mounted particularly with mounting locations, in particular mounting sections, on the top of another housing module. Those mounting locations can be vertical, which means that they act cross to the fluid duct or duct part. The housing modules can be mounted or stacked one above the other.

Advantageously, the modular filter system can comprise at least one sealing means. At least one sealing means can seal at least one duct or duct part. At least one sealing means can be arranged between two housing modules of the modular filter system. A sealing arrangement, in particular at least one sealing means, can circumscribe a fluid flow aperture of a duct or duct part. The sealing arrangement can project on the outside of the housing frame parts. Alternatively, the at least one sealing means can seal against at least one functional component of the modular filter system.

Favorably, at least one functional component of the modular filter system can comprise at least one filter element, at least one means for pre-separation, an outlet plate, a closing end plate, at least one secondary filter and/or at least one cover assembly.

An outlet plate can comprise a fluid outlet of the modular filter system.

A closing end plate can close at least one duct or duct part on a side opposite to a fluid outlet. At least one secondary filter element can be placed upstream of a fluid outlet of the modular filter system.

Advantageously, at least one sealing means can comprise or consist of at least one gasket, in particular at least one air-sealing gasket.

Favorably, in a normal mounting orientation, at least one support for at least one filter element can be on a vertical side of the at least one housing module. Thus, a servicing of the at least one filter element can be done in a horizontal direction. So, the at least one filter element can be fully visible and/or accessible. An easy access can simplify monitoring and replacement.

Favorably, a direction of fluid flow in the modular filtration system can be in a unique way. The fluid can enter the modular filtration system through the filter elements. At least two filter elements can be placed on opposite sides of a fluid duct relating to the direction of fluid flow. The filter elements can have a sideways opening. The filter elements can be separated by at least one, favorably two, inner housing frame parts in the middle between two outer housing frame parts for supporting the filter elements. The inner housing frame parts can realize the duct or duct part. So, the common duct or duct part can be used for at least two filter elements. The cleaned fluid can flow through the common duct or duct part. Such a fluid flow direction can allow lesser restrictions. The at least one duct or duct part can provide a bigger volume for the fluid flow.

The modular filter system can be realized in a single stage or two or more stages dependent on the requirement. Favorably, the modular filter system can be provided with at least one means for pre-separation. The at least one means for pre-separation can form a first stage of the modular filter system. With at least one means for pre-separation particles, in particular dust particles, can be removed before the fluid reaches the at least one filter element. At least one filter element can form a second stage. Optionally, at least one secondary filter element can form a third stage. In total, the modular filter system can be customized depending upon fluid flow and particulate removal requirements of each intended application.

Advantageously, at least one means for pre-separation can comprise at least one cyclone assembly. At least one cyclone assembly can comprise at least one cyclone cell. At least one cyclone assembly can be made up of a frame, at least one cyclone cell for pre-separation and a dust dump valve for dust discharge. The frame can be provided with slots to which the at least one cyclone cell can be fixed. Further the frame can have a provision for fixing the at least one dust dump valve.

Alternatively or additionally, Advantageously, at least one means for pre-separation can comprise at least one foam. At least one means for pre-separation can comprise a frame with a grid at the front. The foam can be placed in front of an inlet of the frame. The foam can be supported by the grid. The foam can filter dust particles with certain specific sizes.

Advantageously, at least one housing frame part can be a equipped with at least one mounting means or arrangement, at least one joining means or arrangement, at least one supporting means or arrangement, in particular at least one supporting surface and/or supporting rib, at least one guide slot, at least one sealing guide, in particular a sealing groove, at least one filter element, at least one means for pre-separation and/or at least one secondary filter element. So, the modular filter system can offer an increased flexibility. At least one housing frame part can be standardized. Thus, the flexibility further can be improved.

At least one housing frame part which is equipped with ribs can be more rigid. Thus, in particular a support for at least one filter element can be improved.

The invention is not limited for filtering air. The invention also can be used for cleaning, in particular filtering, of other kinds of gaseous fluids, Particularly, the modular filter system can be used in combination with a vehicle, particularly a motor vehicle, a rail vehicle, a water vehicle or an aircraft. Additionally or alternatively, the invention can be used with a machine, in particular a construction machine or an agricultural machine. Additionally or alternatively, the invention can be used with a system for heating, ventilation and/or air conditioning.

According to a favourable embodiment of the invention, the housing module can comprise at least three, in particular four, housing frame parts which optional can be combined in at least two ways such, that the housing frame parts form at least one duct or duct part and at least one support for at least one filter element.

Favorably, with two housing frame parts a duct or duct part can be realized. With a third housing frame part at least one support for at least one filter element can be realized.

Alternatively, two inner housing frame parts can realize the duct or duct part in the middle of the housing module. Two outer housing frame parts can be attached to the two inner housing frame parts on opposite sides for realizing two supports each for one filter element.

Favorably, a housing module may comprise four housing frame parts and two filter elements and can have a width of approximately 1 m, a height of approximately 0,5 m and a length in direction of the duct or duct part of approximately 0,5 m. Alternatively, a housing module may comprise two or three housing frame parts and one filter elements and can have a width of approximately 0,5 m or 0,75m, a height of approximately 0,5 m and a length in direction of the duct or duct part of approximately 0,5 m. In a variant with three housing frame parts per housing module, one frame part may preferably be used for establishing a common duct. Multiple housing modules can be combined in a longitudinal direction, so that the length of the whole modular filter system can be a multiple of the length of one of the housing modules. The duct parts of the housing modules can be connected in a row in longitudinal direction to one main duct in the middle of the modular filter system.

According to a further favourable embodiment of the invention, at least one housing frame part can comprise at least one joining section for joining with at least one adjacent housing frame part and/or for joining with at least one functional component of the modular filter system.

Multiple housing frame parts can be secured together along according joining sections for realizing at least one housing module or for combining multiple housing modules.

Additionally or alternatively, at least one housing frame part can be secured with at least one functional component along according joining sections,

Functional components of the modular filter systems can be formed as modules themselves. Multiple, in particular different, functional components can be combined.

Advantageously, at least one housing frame part can have a possibility for connecting at least one cover assembly. The at least one cover assembly can be fixed to at least one housing frame part.

Favorably, at least one cover assembly can be used for assembling at least one means for pre-separation and/or for holding at least one filter element. Alternatively or additionally, at least one cover assembly can be used for covering an inlet side of at least one filter element.

Favorably, at least one cover assembly can comprise at least one lock assembly. At least one lock assembly can comprise at least one clamp, in particular at least one wire clamp. With at least one lock assembly, at least one cover assembly can be fixed at the at least one housing frame part, Additionally or alternatively, at least one functional component can be fixed at the at least one cover assembly by use of at least one lock assembly. At least one cover assembly, in particular at least one lock assembly, can ensure proper sealing of the dirty side of at least one installed filter element from the clean side.

At least one cover assembly can comprise or consist of a plastic frame.

According to a further favourable embodiment of the invention, at least one housing frame part can comprise at least one mounting section for mounting at least one adjacent housing frame part and/or the at least one functional component of the modular filter system.

At least one housing frame part can provide at least one horizontal mounting section and/or at least one vertical mounting section, A horizontal mounting section can act in direction of the fluid duct or duct part. A vertical mounting section can act cross to the fluid duct or duct part.

With the mounting sections, adjacent housing modules can be fixed together, Additionally or alternatively, at least one functional component can be fixed to at least one housing frame part by use of at least one mounting section.

Advantageously, at least one housing frame part can comprise at least one means for fixing and/or guiding at least one lock assembly and/or at least one guiding means of at least one functional component, in particular at least one cover assembly. At least one means for fixing and/or guiding can be on a side of at least one housing module. Additionally and/or alternatively, at least one means for fixing and/or guiding can be on a side of at least one functional component. At least one means for fixing and/or guiding can comprise at least one slot. At least one corresponding guiding means can comprise at least one projection.

According to a further favourable embodiment of the invention, at least one housing frame part can comprise at least one frame part guiding means for guiding at least one appropriate component guiding means of at least one functional component of the modular filter system.

Advantageously, at least one housing frame part guiding means can comprise or consist of at least one guide slot. With the at least one housing frame part guiding means at least one functional component can be guided to the at least one housing frame part. Thus, means for locking the at least one functional component with the at least one housing frame part can be brought together.

Favorably, at least one housing frame part guiding means can ensure that locking assemblies of functional components being locked with the correct parts of the at least one housing frame part. Particularly, at least one housing frame part guiding means can ensure that possible lock clamps can be locked only at corresponding pockets. Particularly, at least one lock clamp can be on the side of the at least one functional component and at least one pocket can be on the side of the at least one housing frame part or vice versa.

Advantageously, at least one functional component in form of a cover assembly can comprise at least one component guiding means in form of a guiding projection. The at least one component guiding means can cooperate with an appropriate housing frame part guiding means for guiding the at least one cover assembly to the at least one housing frame part while locking the cover assembly.

According to further favorable embodiment of the invention, at least one housing frame part, in particular at least one support of the at least one housing frame part, can comprise at least one supporting means, in particular at least one supporting surface and/or supporting rib.

At least one supporting surface and/or at least one supporting rib can be provided inside the housing module, in particular inside the support of at least one housing frame part. The at least one supporting surface and/or supporting rib can support at least one filter element.

The at least one supporting surface and/or supporting rib can be realized such, that the at least one filter element can be supported vertically in a normal mounting orientation of the housing module. So, the at least one supporting surface and/or supporting rib can support the filter element against gravity.

Favorably, at least one supporting rib and/or supporting surface can engage on a circumferential side of the at least one filter element. Particularly, the at least one filter element can have polyurethane foam on its circumferential side. At least one supporting rib and/or supporting surface can engage the entire peripheral polyurethane foam of the at least one filter element.

Favorably, at least one, in particular each filter element can independently be supported at a bottom. Thus, at least one filter element can be installed or removed without effecting adjacent filter elements particularly of adjacent housing modules.

According to a further favorable embodiment of the invention, at least one housing frame part can comprise at least one sealing guide for at least one sealing means, in particular a gasket, with at least one sealing guide joining section and at least one sealing guide end section.

At least one housing frame part can comprise at least one part of at least one sealing guide for at least one appropriate sealing means, in particular at least one gasket. At least one sealing means can be placed in/on at least one sealing guide. At least one sealing guide can hold the at least one sealing means.

At least one sealing guide joining section of one housing frame part can be connected to an appropriate sealing guide joining section of an adjacent housing frame part for completing at least one sealing guide.

Advantageously, at least one sealing guide joining section and at least one sealing guide end section can be arranged such, that they can be used optionally.

In cases where the at least one housing frame part being used as an inner housing frame part of a housing module, its at least one inner sealing joining section can be used for connecting with at least one corresponding inner sealing joining section of at least one adjacent housing frame part. Its at least one outer sealing guide joining section can be used for completing the sealing guide together with at least one corresponding sealing joining section of at least one adjacent outer housing frame part.

In cases where the at least one housing frame part being used as an outer housing frame part of a housing module, its at least one sealing guide end section can be used for completing the sealing guide. Its at least one outer sealing guide joining section is not used.

According the invention, the at least two housing frame parts have a U-shaped profile.

The open side of the U-shaped profile can be connected to an open side of an adjacent U-shaped housing frame part or to a close side of an adjacent U-shaped housing frame part.

The interior of the U-shaped housing frame can act as a part of at least one duct or duct part and/or at least as a part of at least one support for at least one filter element.

According to a further favourable embodiment of the invention, at least one housing frame part can have a rectangular shape. With rectangular housing frame parts a rectangular shaped housing module can be realized.

Advantageously, at least one housing module can be a frame made into a rectangular concept.

According to a further favourable embodiment of the invention, at least one housing frame part can be a half shell. So, with two or more half shell housing frame parts at least one symmetrical housing module can be realized.

According to a further favourable embodiment of the invention, at least one housing module can comprise at least two identical housing frame parts. Thus, the number of part types for realizing at least one housing module can be reduced.

According to a further favourable embodiment of the invention, at least one filter element can be rectangular shaped.

Due to the rectangularity an entire space in particular of an rectangular support of the according at least one housing frame part can be utilized. Thus, a surface area of the at least one filter element, which is active for filtration, can be improved.

Advantageously, at least one rectangular shaped filter element easy can be supported by the support of the at least one housing frame part. A rectangular shaped filter element securely can seal into a rectangular housing frame part.

Favorably, at least one filter element can have at least one sealing means for sealing a clean side from a dirt side when the at least one filter element is installed into the support of the at least one housing module. Particularly, at least one sealing means can comprise or consist of foam, in particular polyurethane (PU) foam.

Advantageously, at least one filter element can have a bellow of filter medium. The bellow can have a rectangular shape.

Advantageously, at least one filter element can have a pleated filter medium. The depth of the pleats in flow direction of the fluid through the at least one filter element can be large compared to the extension of the filter element perpendicular to the flow direction. Filter elements with comparatively deep pleats can have larger filtration area compared to filter elements with more flat pleats. Further, a dust holding capacity can be improved by using pleats with improved depth.

At least one filter element can be suitable for enabling a flow rate of approximately 50 m³/min.

### Brief Description of Drawings

The present invention together with the above-mentioned and other objects and advantages may best be understood from the following detailed description of the embodiments, but not restricted to the embodiments, wherein is shown schematically
- figure 1: a modular air filter system with five filter modules, an end plate, an outlet plate and a secondary filter element, wherein each filter module comprises one housing module each with four housing frame parts, two filter elements and two cyclone assemblies;
- figure 2: an exploded view of one of the filter modules of the modular air filter system of figure 1;
- figure 3: an exploded view of one of the filter modules, the secondary filter element, the outlet plate and the closing end plate of the modular air filter system of figure 1;
- figure 4: a detailed view of one of the housing frame parts of the housing modules of figure 1 to 3;
- figure 5: an exploded view of an alternative of one of the filter modules of the modular air filter system of figure 1.

In the drawings, equal or similar elements are referred to by equal reference numerals, The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

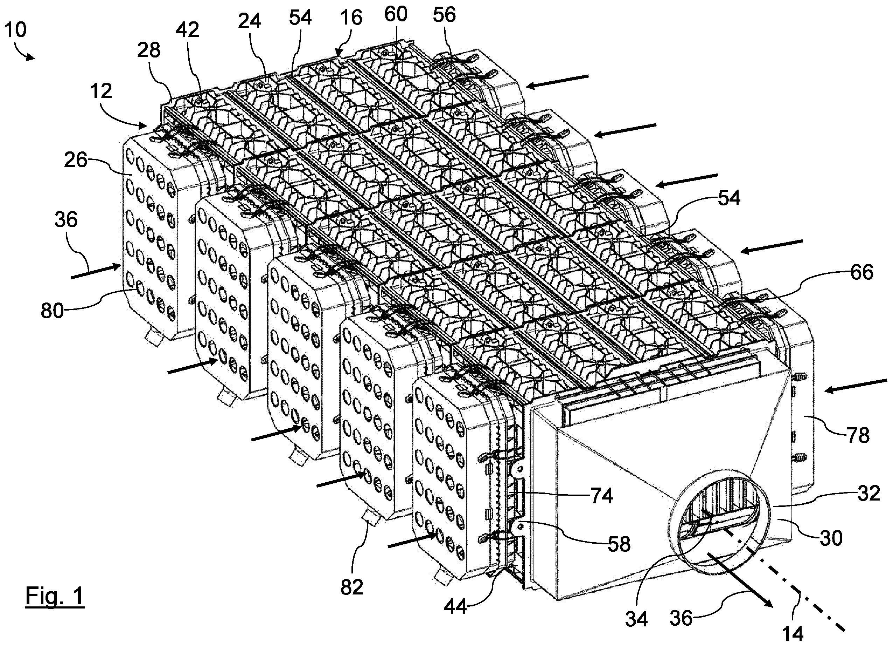

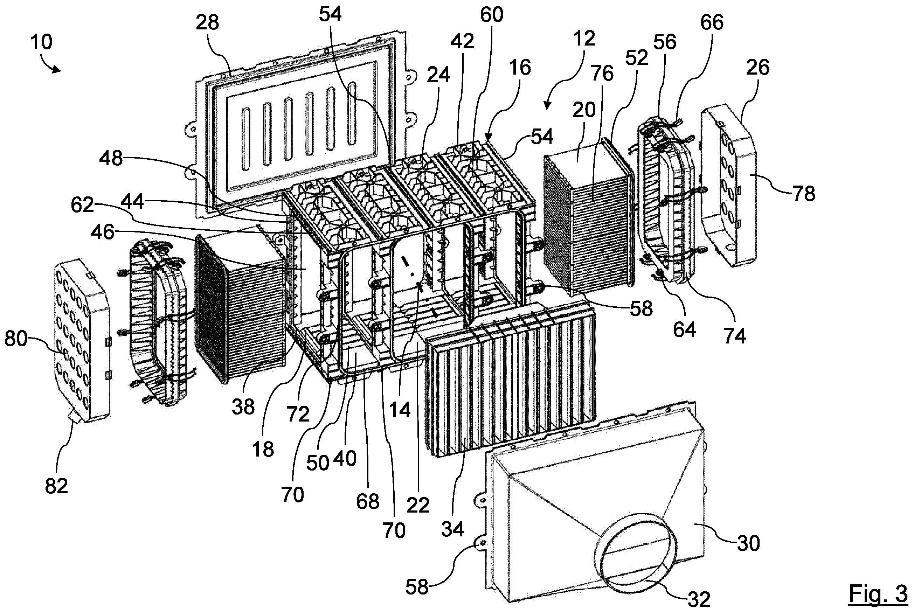

In figures 1 to 4 a modular air filter system 10 is shown in different views. The modular air filter system 10 is intended for the cleaning of air. The modular air filter system 10 exemplary can be part of a system for heating, ventilation and air conditioning.

The modular air filter system 10 comprises five identical filter modules 12 which are connected in a row in direction of an axis 14. In terms of function the filter modules 12 are arranged parallel. Each filter module 12 comprises one housing module 16.

Each housing module 16 contains two supports 18 with one filter element 20 each on opposite sides of a duct part 22. In a normal mounting orientation, which is shown in figure 1, the supports 18 for the filter elements 20 are on the vertical sides of the housing modules 16.

The filter elements 20 of one filter module 12 are separated by two inner housing frame parts 24 in the middle between two outer housing frame parts 24 for supporting the filter elements 20. The inner housing frame parts 24 form the duct part 22. The common duct part 22 being used for both filter elements 20.

The filter elements 20 have a54sideways opening each. One cyclone assembly 26 is connected upstream of the filter elements 20 each.

In the modular air filter system 10 the duct parts of the filter modules 12 are connected in series to the common duct for the air on the clean side of the filter elements 20. The common duct is coaxial to the axis 14. The axis 14 defines the direction of the common duct and the duct parts 22. On one face side of the modular air filter system 10, the common duct is closed by a closing end plate 28. On the opposite face side, an outlet plate 30 with an outlet 32 for the filtered air is connected to the last filter module 12. Between the outlet aperture of the duct and the outlet plate 30 a secondary filter element 34 is arranged.

The direction of air flow in the modular air filtration system 10 is in a unique way. In figure 1 the air flow is indicated with arrows 36. The air enters the modular air filtration system 10 through the cyclone assemblies 26 and the filter elements 20. The cleaned fluid streams through the common duct. The air flows through the secondary filter element 34 and leaves the air filter module 12 through the outlet 32. Each housing module 16 comprises four identical housing frame parts 24 each with a support section 38 and a duct section 40. Each housing frame part 24 optional can be combined in two ways such, that it forms the duct part 22 or one support 18 for one of the filter elements 20.

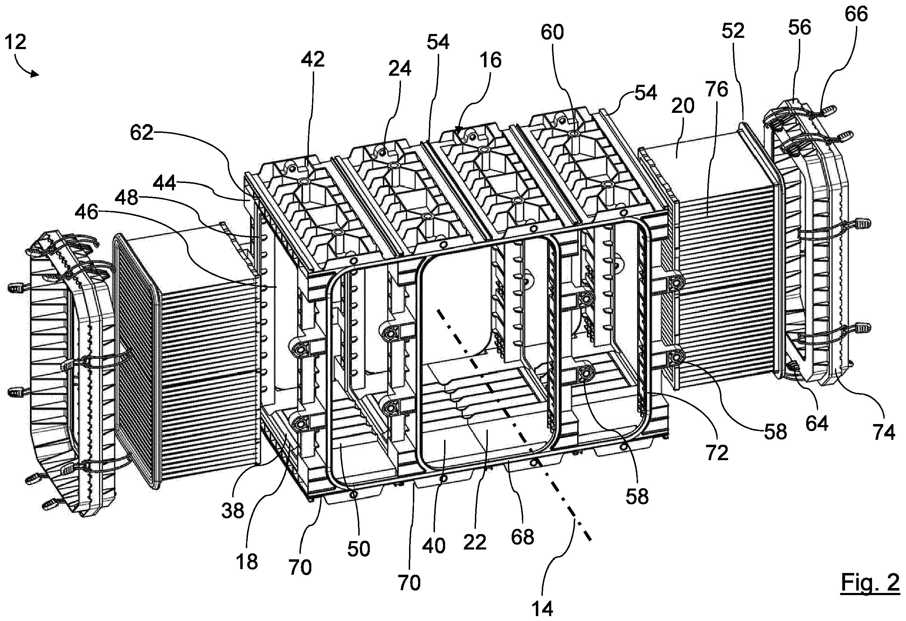

Each housing module 16 has a width perpendicular to the axis 14 of approximately 1 m, a height perpendicular to the axis 14 of approximately 0,5 m and a length in direction of the axis 14 of approximately 0,5 m. In figure 2 the width extends approximately in horizontal direction and the height extends approximately in vertical direction. The length of the whole modular air filter system 10 with the five housing modules 16 including the outlet plate 30 is approximately 3 m.

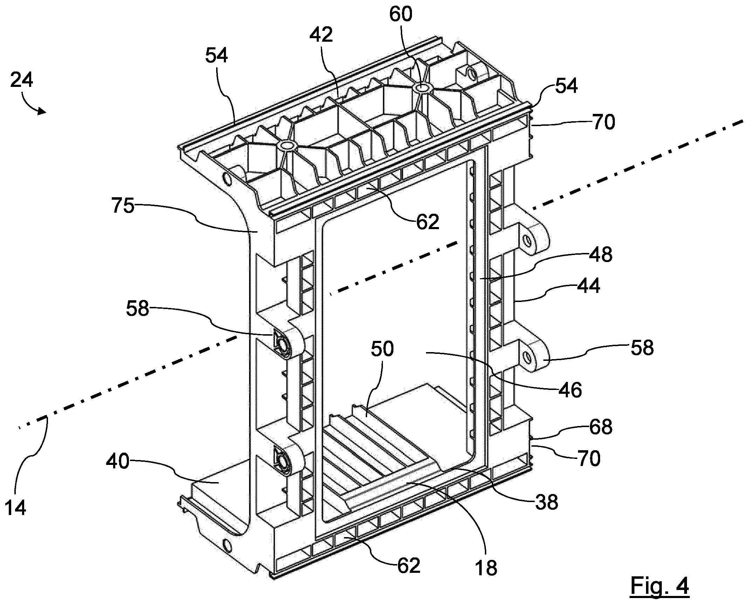

One of the housing frame parts 24 is shown in detail in figure 4. The housing frame parts 24 consist of plastic.

Each housing frame part 24 is a half shell with a rectangular shape and a U-shaped profile, it has two side sections 42 which realize the legs of the U-shape and which are connected on one side with a center section 44. The open side of the U-shaped profile can either be connected to an open side of an adjacent U-shaped housing frame part 24 or to a close side of an adjacent U-shaped housing frame part 24. The interior of the U-shaped housing frame part 24 can act as a part of the duct part 22 or as a part of the support 18 for the corresponding filter element 20. At their outsides the side sections 42 are equipped with ribs for stabilization.

Each housing frame part 24 comprises one support section 38 which is suitable for realizing one support 18 for one filter element 20. The support section 38 comprises a rectangular opening 46 in the center section 44. On the outside of the center section 44, the rectangular opening 46 is surrounded by a sealing frame 48.

The support 18 further comprises multiple supporting ribs 50 which are arranged inside the support 18 on the inside of each side section 42. The supporting ribs 50 extend in direction perpendicular to the plane of the center section 44 in direction of installing a filter element 20 if applicable. The supporting rips 50 extend to the inner surfaces of the side sections 42.

If the housing frame part 24 is used on the outside of the filter module 12, a sealing means 52 of the filter element 20 is arranged in the sealing frame 48. The supporting ribs 50 support the filter element 20. In a normal mounting orientation of the housing module 16 the filter elements 20 being supported vertically by the supporting ribs 50 against gravity. The supporting ribs 50 engage on a circumferential side of the filter element 20. The filter element 20 has polyurethane foam on its circumferential side. The supporting ribs 50 engage the entire peripheral polyurethane foam of the filter element 20.

If the housing frame part 24 is used in the center of the filter module 12, the rectangular opening 46 acts as an orifice for the filtered air. The clean side of the filter element 20 can rest on the sealing frame 48.

The duct section 40 of the housing frame part 24 is suitable for realizing a half shell of the duct part 22 of the filter module 12. The duct section 40 is formed by the side sections 42 and the center section 44. The side sections 42 and the center section 44 span a half of the duct part 22 of the filter module 12.

Each housing frame part 24 further comprises four joining sections 54 for joining with adjacent housing frame parts 24. The joining sections 54 each extend parallel to the axis 14 on the edges of the housing frame part 24. Two inner joining sections 54 are on the free edges of the side sections 42. Two outer joining sections 54 are opposite to the inner joining sections 54 in an area of transition from the side sections 42 to the center section 44.

The two inner housing frame parts 24 are connected along their two inner joining sections 54 each in the middle of the housing module 16. Each outer housing frame part 24 is connected along its inner joining sections 54 to the outer joining sections 54 of the adjacent inner housing frame part 24.

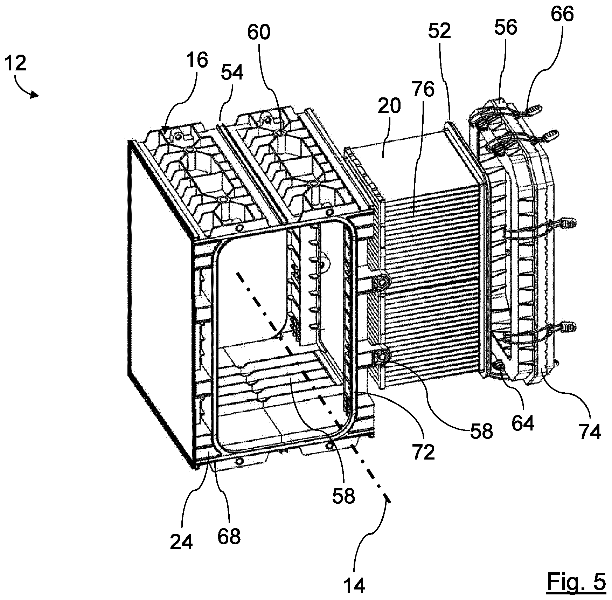

In the alternative embodiment of Figure 5, only the two inner housing frame parts 24 are provided and connected along their two inner joining sections 54 each in the middle of the housing module 16.

The outside of the outer joining sections 54 of the housing frame parts 24 further are prepared for connecting a cover assembly 56 for fixing the filter element 20 and assembling the cyclone assembly 26 if applicable. In the alternative embodiment of Figure 5, this is only provided on one side (the right side in Fig. 5) of the housing module. The outer joining section of the left frame part 24 is closed by a wall. The common duct will is established in this embodiment between the filter element and the housing walls.

Further, each housing frame part 24 comprises eight mounting sections 58 optionally for mounting adjacent housing frame parts 24 or other functional components of the modular air filter system 10.

Each housing frame part 24 provides two horizontal mounting sections 58 on each free edge of the center section 44. The free edges of the center section 44 extend between the side sections 42, in figure 4 in vertical direction. Each horizontal mounting section 58 comprises a tongue-shaped protrusion with a screw hole each. An axis of the screw hole extends parallel to the axis 14. As necessary, a screw can arranged in the screw hole. The screw can act in direction of the axis 14 of the duct part 22.

The housing modules 16 are stacked together axial to the axis 14 in flow direction of the duct. With the horizontal mounting sections 58 adjacent housing modules 16 are connected. With the screws of the horizontal mounting sections 58 adjacent housing modules 16 are fixed together.

Further, each housing frame part 24 provides two vertical mounting sections 60 in each side section 42. The vertical mounting sections 16 each comprise a screw hole for a screw which can act cross to the axis 14. With the vertical mounting sections 60 optionally adjacent housing modules 16 can be stacked on top of each other cross to the duct part 22. In the described embodiment, the vertical mounting sections 60 are not in use.

Furthermore, each housing frame part 24 has multiple housing frame part guiding means in form of guide slots 62 for guiding appropriate component guiding means 64 of a cover assembly 56 and for fixing appropriate lock assemblies 66 of the cover assembly 56 if required.

The guide slots 62 are in the center section 44 near the outer edges of the side sections 42 besides the joining sections 54. The guide slots 62 are placed between the joining sections 54 and the opening 46 of the center section 44. The guide slots 62 are arranged side by side in direction parallel to the axis 14. With the completed filter module 12 the guide slots 62 of the outer housing frame parts 24 are on the side of the housing module 16.

Furthermore, each housing frame part 24 comprises a sealing guide 68 on one face side. With the completed housing module 16 the sealing guides 68 of the housing frame parts 24 are put together to a continuous sealing guide for one air-sealing gasket. In the shown embodiment, the sealing guides 68 are on the face sides of the housing frame parts 24 which are facing the outlet plate 30.

The sealing guide 68 of each housing frame parts 24 extends along the edges of the two side sections 42 and the center section 44. Each sealing guide 68 has four sealing guide joining sections 70 and one sealing guide end section 72. Two inner sealing guide joining sections 70 extend along the side sections 42 and open to respective free edges of which. Two outer sealing guide joining sections 70 extend along the side sections 42 and open to respective transitions of which to the center section 44. The sealing guide end section 72 extends along the center section 44. The sealing guide end section 72 connects the two outer sealing guide joining sections 70 such, that the outer sealing guide joining sections 70 and the sealing guide end section 72 optionally can be used.

With the completed housing module 16 the inner sealing guide joining sections 70 of the two inner housing frame parts 24 are connected to each other. The outer sealing guide joining sections 70 of the inner housing frame parts 24 are connected to the inner sealing guide joining sections 70 of the outer housing frame parts 24. The outer sealing guide joining sections 70 of the outer housing frame parts 24 are not used. Instead of that, the sealing guide end sections 72 of the outer housing frame parts 24 complete the continuous sealing guide for the gasket.

The face side of each housing frame parts 24 opposite to the sealing guides 68 are formed as a part of a sealing surface 75 for the gasket of the adjacent housing frame part 24.

In each continuous sealing guide between two housing modules 16 one air-sealing gasket is placed. The gaskets are sealing the duct parts 22. The sealing arrangements with the gaskets, the sealing guides 68 of the continuous sealing guide and the sealing surfaces 75 circumscribe the air flow apertures of the adjacent duct parts 22 between the housing modules 16. The sealing arrangements project on the outside of each housing frame part 24. The gasket of the housing module 16 adjacent to the outlet plate 30 is sealing against the outlet plate 30. A gasket of the closing end plate 28 is sealing against the housing module 16 on the opposite side.
Each cover assembly 56 comprises a rectangular plastic frame 74. Six lock assemblies 66 in form of wire clamps are distributed along the radial outer circumferential sides of each cover assembly 56. Each cover assembly 56 is secured to the adjacent outer housing frame part 24 along the outer joining section 54 of which. The cover assemblies 56 each cover an inlet side of the respective filter element 20.

Each cover assembly 56 further comprises four component guiding means 64 in form of guiding projections. Two component guiding means 64 each are on opposite edges of the frame of the cover assembly 56 which are corresponding to the side sections 42 of the adjacent housing frame parts 24. The component guiding means 64 are directed toward the adjacent housing frame part 24. The component guiding means 64 cooperate with the appropriate guide slots 62 for guiding the cover assembly 56 on to the housing frame part 24 while locking the cover assembly 56.

The lock assemblies 66 of the cover assemblies 56 further act as appropriate component guiding means 64. With the guiding feature of the guide slots 62 of the adjacent housing frame part 24, the lock assemblies 66 and the guide slots 62 can be brought together. The guide slots 62 ensure that the lock assemblies 66 being locked only at an corresponding pocket on side of the housing frame part 24. The cover assemblies 56 with the lock assemblies 66 ensure proper sealing of the dirty side from the clean side of the installed filter element 20.

The filter elements 20 are formed identical. Each filter element 20 has a rectangular shape.

The filter elements 20 each have a bellow of pleated filter medium 76. The bellows have an rectangular shape each. The depth of the pleats of the filter medium 76 in flow direction of the air through the filter element 20 is large compared to the extension of the filter element 20 perpendicular to the flow direction, The flow direction of the air through the filter element 20 exemplary is perpendicular to the axis 14.

The sealing means 52 of the filter elements 20 are for sealing the clean side from the dirt side when the filter element 20 is built in the support 18 of the housing module 16. The sealing means 52 consist of polyurethane (PU) foam. The sealing means 52 surround the inlet sides of the filter elements 20.

Each filter element 20 enables an air flow rate of approximately 50 m³/min. So, with each filter module 12 an air flow rate of approximately 100 m³/min can be enabled. With the complete air filter module 12 a total air flow rate of approximately 500 m³/min can be realized. All filter elements 20 of the air filter module 12 are acting parallel in terms of function.

The modular air filter system 10 is realized in three stages. The cyclone assemblies 26 realize the first stage, the filter elements 20 realize the second stage and the secondary filter element 34 realizes the third stage.

Each filter module 12 is provided with two cyclone assemblies 26 for pre-separation of dust particles. The cyclone assemblies 26 are pre-connected to one of the filter elements 20 by use of the respective cover assembly 56 and lock assemblies 66 of which. With the cyclone assemblies 26, the dust particles can be removed before the air reaches the adjacent filter element 20.

Each cyclone assembly 26 is made up of a cyclone frame 78. The cyclone frame 78 is provided with slots in which 25 cyclone cells 80 for pre-separation are fixed. A dust dump valve 82 for dust discharge leads through the bottom of the cyclone frame 78.

The secondary filter element 34 is a flat rectangular filter element 20. It is placed upstream of the outlet plate 30 between the outlet plate 30 and the last filter module 12.

The outlet plate 30 is rectangular funnel shaped. The outlet plate 30 comprises the air outlet 32 of the modular air filter system 10.

The outlet plate 30 and the closing end plate 28 each have four horizontal mounting sections 58 which are suitable for the four responsible mounting sections 58 of the housing frame parts 24, With the horizontal mounting sections 58, the outlet plate 30 and the closing end plate 28 each are fixed to the adjacent housing module 16.

The filter elements 20, the cyclone assemblies 26, the secondary filter element 34, the cover assemblies 56, the outlet plate 30 and the closing end plate 28 are functional components of the module air filter system 10 each.

## Claims

1. Modular filter system (10) for cleaning of gaseous fluid, in particular air, comprising at least one housing module (16) with at least one support (18) in which at least one filter element (20) is arranged and at least one duct for the gaseous fluid on the clean side of the at least one filter element (20), **wherein** at least one housing module (16) has at least two identical housing frame parts (24), and said at least two housing frame parts (24) each comprise at least one duct section (40), wherein the at least one duct section (40) is suitable for realizing at least one duct or duct part (22), wherein at least one housing frame part (24) is applied in the housing module (16) such, that its at least one support section (38) forms the at least one support (18) and wherein at least one housing frame part (24) is applied in the housing module (16) such, that its at least one duct section (40) is part of or forms the at least one duct, wherein each housing frame part (24) is a half shell with a rectangular shape and a U-shaped profile, comprising two side sections (42) which realize the legs of the U-shape and which are connected on one side with a center section (44), wherein the duct section (40) is formed by the side sections (42) and the center section (44), wherein each housing frame part (24) comprises at least one support section (38) for realizing a support (18) for the filter element (20), the support section (38) comprising an opening (46) in the center section (44).

2. Modular filter system according to claim 1, **characterized in that,** the housing module (16) comprises at least three, in particular four, housing frame parts (24) which optional can be combined in at least two ways such, that the housing frame parts (24) form at least one duct or duct part (22) and at least one support (18) for at least one filter element (20).

3. Modular filter system according to claim 1 or 2, **characterized in that,** at least one housing frame part (24) comprises at least one joining section (54) for joining with at least one adjacent housing frame part (24) and/or for joining with at least one functional component (56) of the modular filter system (10).

4. Modular filter system according to one of the previous claims, **characterized in that,** at least one housing frame part (24) comprises at least one mounting section (58, 60) for mounting at least one adjacent housing frame part (24) and/or the at least one functional component of the modular filter system (10).

5. Modular filter system according to one of the previous claims, **characterized in that,** at least one housing frame part (24) comprises at least one frame part guiding means (62) for guiding at least one appropriate component guiding means (64) of at least one functional component (56) of the modular filter system (10).

6. Modular filter system according to one of the previous claims, **characterized in that** at least one housing frame part (24), in particular at least one support (18) of the at least one housing frame part (24), comprises at least one supporting means, in particular at least one supporting surface and/or supporting rib (50).

7. Modular filter system according to one of the previous claims, **characterized in that,** at least one housing frame part (24) comprises at least one sealing guide (68) for at least one sealing means, in particular a gasket, with at least one sealing guide joining section (70) and at least one sealing guide end section (72).

8. Modular filter system according to one of the previous claims, **characterized in that** at least one filter element (20) is rectangular shaped.

9. Modular filter system according to one of the previous claims, **characterized in that** the open side of the U-shaped profile is configured to be connectable to an open side of an adjacent U-shaped housing frame part (24) and to a close side of an adjacent U-shaped housing frame part (24).

10. Modular filter system according to one of the previous claims, **characterized in that** the opening (46) in the center section (44) is rectangular.

11. Modular filter system according to one of the previous claims, **characterized in that** the opening (46) is surrounded by a sealing frame (48).

## Patentansprüche

1. Modulares Filtersystem (10) zum Reinigen von gasförmigem Fluid, insbesondere von Luft, umfassend mindestens ein Gehäusemodul (16) mit mindestens einem Träger (18), in dem mindestens ein Filterelement (20) angeordnet ist und mindestens eine Leitung für das gasförmige Fluid auf der Reinseite des mindestens einen Filterelementes (20), wobei mindestens ein Gehäusemodul (16) mindestens zwei identische Gehäuserahmenteile (24) aufweist, und die mindestens zwei Gehäuserahmenteile (24) umfassen jeweils mindestens einen Leitungsabschnitt (40), wobei der mindestens eine Leitungsabschnitt (40) für die Realisierung mindestens einer Leitung oder eines Leitungsteils (22) geeignet ist, wobei mindestens ein Gehäuserahmenteil (24) in dem Gehäusemodul (16) so angebracht ist, dass sein mindestens einer Trägerabschnitt (38) den mindestens einen Träger (18) bildet und wobei mindestens ein Gehäuserahmenteil (24) so in dem Gehäusemodul (16) angebracht ist, dass sein mindestens einer Leitungsabschnitt (40) Teil der mindestens einen Leitung ist oder diese bildet, wobei jedes Gehäuserahmenteil (24) eine Halbschale mit einem rechteckigen Profil und einem U-förmigen Profil ist, umfassend zwei Seitenabschnitte (42), die die Schenkel des U-förmigen Profils bilden und die auf einer Seite mit einem Mittelabschnitt (44) verbunden sind, wobei der Leitungsabschnitt (40) von den Seitenabschnitten (42) und dem Mittelabschnitt (44) gebildet wird, wobei jedes Gehäuserahmenteil (24) mindestens einen Trägerabschnitt (38) zur Realisierung eines Trägers (18) für das Filterelement (20) umfasst , der Trägerabschnitt (38) umfassend eine Öffnung (46) in dem Mittelabschnitt (44).

2. Modulares Filtersystem nach Anspruch 1, **dadurch gekennzeichnet, dass** das Gehäusemodul (16) mindestens drei, insbesondere vier, Gehäuserahmenteilen (24) umfasst, die optional auf mindestens zwei Arten so kombiniert werden können, dass die Gehäuserahmenteile (24) mindestens eine Leitung oder einen Leitungsteil (22) und mindestens einen Träger (18) für mindestens ein Filterelement (20) bilden.

3. Modulares Filtersystem nach Anspruch 1 oder 2, **dadurch gekennzeichnet, dass** mindestens ein Gehäuserahmenteil (24) mindestens einen Verbindungsabschnitt (54) zum Verbinden mit mindestens einem benachbarten Gehäuserahmenteil (24) und/oder zum Verbinden mit mindestens einem Funktionsbauteil (56) des modularen Filtersystems (10) umfasst.

4. Modulares Filtersystem nach einem der vorherigen Ansprüche, **dadurch gekennzeichnet, dass** mindestens ein Gehäuserahmenteil (24) mindestens einen Montageabschnitt (58, 60) zum Montieren mindestens eines benachbarten Gehäuserahmenteils (24) und/oder des mindestens einen Funktionsbauteils des modularen Filtersystems (10) umfasst.

5. Modulares Filtersystem nach einem der vorherigen Ansprüche, **dadurch gekennzeichnet, dass** mindestens ein Gehäuserahmenteil (24) mindestens ein Rahmenteilführungsmittel (62) zum Führen mindestens eines geeigneten Bauteilführungsmittels (64) eines mindestens einen Funktionsbauteils (56) des modularen Filtersystems (10) umfasst.

6. Modulares Filtersystem nach einem der vorherigen Ansprüche, **dadurch gekennzeichnet, dass** mindestens ein Gehäuserahmenteil (24), insbesondere mindestens ein Träger (18) des mindestens einen Gehäuserahmenteils (24), mindestens ein Stützmittel, insbesondere mindestens eine Auflagefläche und/oder Stützrippe (50), umfasst.

7. Modulares Filtersystem nach einem der vorherigen Ansprüche, **dadurch gekennzeichnet, dass** mindestens ein Gehäuserahmenteil (24) mindestens eine Dichtungsführung (68) für mindestens ein Dichtmittel, insbesondere eine Dichtung, mit mindestens einem Dichtungsführungsverbindungsabschnitt (70) und mindestens einem Dichtungsführungsendabschnitt (72) umfasst.

8. Modulares Filtersystem nach einem der vorherigen Ansprüche, **dadurch gekennzeichnet, dass** mindestens ein Filterelement (20) rechteckig geformt ist.

9. Modulares Filtersystem nach einem der vorherigen Ansprüche, **dadurch gekennzeichnet, dass** die offene Seite des U-förmigen Profils so konfiguriert ist, dass sie mit einer offenen Seite eines benachbarten U-förmigen Gehäuserahmenteils (24) und mit einer geschlossenen Seite eines benachbarten U-förmigen Gehäuserahmenteils (24) verbunden werden kann.

10. Modulares Filtersystem nach einem der vorherigen Ansprüche, **dadurch gekennzeichnet, dass** die Öffnung (46) in dem Mittelabschnitt (44) rechteckig ist.

11. Modulares Filtersystem nach einem der vorherigen Ansprüche, **dadurch gekennzeichnet, dass** die Öffnung (46) von einem Dichtungsrahmen (48) umgeben ist.

## Revendications

1. Système de filtre modulaire (10) pour l'épuration de fluide gazeux, notamment d'air, comprenant au moins un module de logement (16) avec au moins un support (18) dans lequel est disposé au moins un élément filtrant (20) et au moins un conduit pour le fluide gazeux du côté pur de l'élément filtrant (20), au moins au nombre d'un, au moins un module de logement (16) comportant au moins deux parties de cadre de logement (24) identiques, et lesdites parties de cadre de logement (24), au moins au nombre de deux, comprenant chacune au moins une section de conduit (40), la section de conduit (40), au moins au nombre d'une, étant appropriée pour réaliser au moins un conduit ou une partie de conduit (22), au moins une partie de cadre de logement (24) étant installée dans le module de logement (16) de telle manière, que sa section de support (38), au moins au nombre d'une, forme le support (18), au moins au nombre d'un, et au moins une partie de cadre de logement (24) étant installée dans le module de logement (16) de telle manière que sa section de conduit (40), au moins au nombre d'une, forme le ou fait partie du conduit, au moins au nombre d'un, chaque partie de cadre de logement (24) étant une demi-coque de forme rectangulaire et en forme de U, comprenant deux sections latérales (42) qui réalisent les branches du profilé en U et qui sont reliées sur un côté à une section centrale (44), la section de conduit (40) étant formée par les sections latérales (42) et la section centrale (44), chaque partie de cadre de logement (24) comprenant au moins une section de support (38) pour réaliser un support (18) pour l'élément filtrant (20), la section de support (38) comprenant une ouverture (46) dans la section centrale (44).

2. Système de filtre modulaire selon la revendication 1, **caractérisé en ce que** le module de logement (16) comprend au moins trois, notamment quatre, parties de cadre de logement (24) qui peuvent être combinées optionnellement au moins de deux façons de telle manière que les parties de cadre de logement (24) forment au moins un conduit ou une partie de conduit (22) et au moins un support (18) pour au moins un élément filtrant (20).

3. Système de filtre modulaire selon la revendication 1 ou 2, **caractérisé en ce qu'**au moins une partie de cadre de logement (24) comprend au moins une section de jonction (54) pour joindre la partie de cadre de logement (24) adjacente, au moins au nombre d'une, et/ou pour joindre l'élément fonctionnel (56), au moins au nombre d'un, du système de filtre modulaire (10).

4. Système de filtre modulaire selon l'une des revendications précédentes, **caractérisé en ce qu'**au moins une partie de cadre de logement (24) comprend au moins une section de montage (58, 60) pour monter au moins une partie de cadre de logement (24) adjacente et/ou l'élément fonctionnel, au moins au nombre d'un, du système de filtre modulaire (10).

5. Système de filtre modulaire selon l'une des revendications précédentes, **caractérisé en ce qu'**au moins une partie de cadre de logement (24) comprend au moins moyen de guidage de partie de cadre (62) pour guider au moins un moyen de guidage de composant approprié (64) d'un élément fonctionnel (56), au moins au nombre d'un, du système de filtre modulaire (10).

6. Système de filtre modulaire selon l'une des revendications précédentes, **caractérisé en ce qu'**au moins une partie de cadre de logement (24), notamment au moins un support (18) de la partie de cadre de logement (24), au moins au nombre d'une, comprend au moins un élément de soutient, notamment au moins une surface d'appui et/ou une nervure d'appui (50).

7. Système de filtre modulaire selon l'une des revendications précédentes, **caractérisé en ce qu'**au moins une partie de cadre de logement (24) comprend au moins un guide d'étanchéité (68) pour au moins un dispositif d'étanchéité, notamment un joint d'étanchéité, avec au moins une section de jonction de guide d'étanchéité (70) et au moins une section d'extrémité de guide d'étanchéité (72).

8. Système de filtre modulaire selon l'une des revendications précédentes, **caractérisé en ce qu'**au moins un élément filtrant (20) a une forme rectangulaire.

9. Système de filtre modulaire selon l'une des revendications précédentes, **caractérisé en ce que** le côté ouvert du profilé en U est configuré pour pouvoir être relié à un côté ouvert d'une partie de cadre de boîtier en U adjacente (24) et à un côté fermé d'une partie de cadre de boîtier en forme de U adjacente (24).

10. Système de filtre modulaire selon l'une des revendications précédentes, **caractérisé en ce que** l'ouverture (46) dans la section centrale (44) est rectangulaire.

11. Système de filtre modulaire selon l'une des revendications précédentes, **caractérisé en ce que** l'ouverture (46) est entourée d'un cadre d'étanchéité (48).
